# EUROPEAN PATENT SPECIFICATION

(11) **EP 4 371 643 B1**
(45) Date of publication and mention of the grant of the patent: **18.02.2026**
(21) Application number: 23206772.8
(22) Date of filing: 30.10.2023
(51) Int. Cl.: B01D 45/08

(54) **SHALLOW INCLINE PLATE SETTLEMENT APPARATUS AND PARTICLE TRAPPING METHOD**
FLACHNEIGUNGSPLATTENABRECHNUNGSVORRICHTUNG UND PARTIKELEINFANGVERFAHREN
APPAREIL DE RÈGLEMENT DE PLAQUE À FAIBLE INCLINAISON ET PROCÉDÉ DE PIÉGEAGE DE PARTICULES

(30) Priority: 16.11.2022 CN 202211433393
(43) Date of publication of application: 22.05.2024
(73) Proprietor: CERI Environment Protection Technology Co. Ltd., Beijing (CN); MCC Capital Engineering & Research Incorporation Limited, Beijing (CN)
(72) Inventor: Yang, Yuanman, Beijing (CN); Wan, Qingming, Beijing (CN); Yang, Minghua, Beijing (CN); Mu, Huaiping, Beijing (CN); Zhang, Fengpo, Beijing (CN); Lin, Wentao, Beijing (CN); Wang, Lin, Beijing (CN)
(74) Representative: Slingsby Partners LLP

(56) References cited:
- CN-A- 112 263 878
- CN-A- 112 267 002
- CN-A- 113 804 007
- CN-U- 214 861 855
- GB-A- 2 069 867

## Description

### TECHNICAL FIELD

The present disclosure relates to the technical field of steelmaking, and particularly to a shallow incline plate settlement apparatus and a particle trapping method which are applicable to high-temperature working conditions.

### BACKGROUND

Converter steelmaking is an intermittent production mode. In the normal smelting production stage of the converter, the flue gas temperature, the flue gas volume, the dust content, the flue gas velocity in the pipeline and the CO content are high. In order to prevent the explosion of the flue gas caused by the ignition of the carried high-temperature kindling with large particles, it is necessary to complete the separation of high-temperature large particles, especially those of a centi-millimeter level (i.e., with an average particle size not less than 50 µm) before the waste heat recovery, so as to ensure that there is no explosion in the whole stage of the waste heat recovery. In the preparation stage of the converter, the flue gas temperature, the flue gas volume, the dust content and the flue gas velocity in the pipeline are low, and the CO content is between upper and lower limits of the explosion concentration. If there is a kindling with large particles of sufficient energy in this stage, it is likely to cause an explosion, so the trapping of the large particles in this stage is also important.

At present, there are many separation and trapping technologies for large particles of the centi-millimeter level in the flue gas, mainly including a wet or semi-dry separation, a cyclone separation and a bag separation, etc., which separate the large particles from the flue gas by the gravity, a centrifugal force, an inertia force and a resistance. As the wet or semi-dry separation technology needs extra water, the physical and chemical properties of dust particles (mainly composed of Fe₂O₃) will change under the condition of high temperature and water, which affects the secondary utilization of dust. The cyclone separation technology is easy to produce vortexes in the flue gas. The bag separation technology suffers from large pressure loss and is not suitable for the high-temperature flue gas. Therefore, it is necessary to develop a dry trapping technology for the large particles of the centi-millimeter level, which is efficient, simple and adaptable to intermittent conversion between high, medium and low temperatures and intermittent conversion between high, medium and low velocities.

Separation devices are known in the prior art, e.g. from GB2069867A, CN112267002A, CN112263878A, CN113804007A, and CN214861855U.

Based on years of experiences and practices in related industries, the inventor of the present disclosure proposes a shallow incline plate settlement apparatus and a particle trapping method to overcome the defects of the prior art.

### SUMMARY

An objective of the present disclosure is to provide a shallow incline plate settlement apparatus and a particle trapping method. Each of the inclined plates of the shallow settling unit adopts a biaxial inclined structure, so as to reduce the influence of deformation caused by high-temperature thermal stress on the settling effect of the inclined plate and reduce the ash deposition. A tail baffle is disposed behind the shallow settling unit, so as to reduce the frontal scouring of the high-temperature flue gas on a next contact unit when the high-temperature flue gas flows out of the shallow settling unit.

The present invention is set out in the appended set of claims. Any references to inventions or embodiments not falling within the scope of the independent claims are to be interpreted as examples useful for understanding the invention.

Based on the above content, the shallow incline plate settlement apparatus and the particle trapping method of the present disclosure have the following advantageous effects:
According to the present disclosure, the shallow incline plate settlement apparatus is disposed in the inclined plate settling area, so that when the dust-containing flue gas enters into the shallow incline plate settlement apparatus at a low velocity, particles are settled on the inclined plate, thereby realizing separation of particles from the flue gas. The present disclosure adopts shallow settling technology, and the settling effect can be ensured by reasonably setting the number of layers of the inclined plates and the spacings between the inclined plates of the shallow settling unit.

Each of the inclined plates of the shallow settling unit adopts a biaxial inclined structure, thereby reducing the influence of the steel plate deformation caused by high-temperature thermal stress on the settling and collection effects.

The tail baffle disposed at the tail of the inclined plate group of the shallow settling unit can not only direct the flow of the flue gas, but also prevents the flue gas, especially the high-temperature flue gas, from directly scouring the next contact unit.

### BRIEF DESCRIPTION OF THE DRAWINGS

The following drawings are only for the schematic illustration and explanation of the present disclosure, rather than limiting the scope of the present disclosure. In the drawings:
FIG. 1 is a schematic diagram of a shallow incline plate settlement apparatus of the present disclosure used in a cylindrical flue.
FIG. 2 is a cross-sectional view taken along line A-A in FIG. 1.
FIG. 3 is a schematic diagram of a shallow settling unit of the present disclosure.
FIG. 4 is a view taken along direction B in FIG. 3.
FIG. 5 is a schematic diagram of an upper inclined plate in the shape of isosceles trapezoid with straight front and rear sides.
FIG. 6 is a schematic diagram of an upper inclined plate in the shape of isosceles trapezoid with circular-arced front and rear sides.

In the drawings,
101: flue gas inlet; 102: flue gas outlet; 103: ash outlet;
2: shallow incline plate settlement apparatus;
21: settling layer; 211: shallow settling unit; 2111: bottom inclined plate;
2112: upper inclined plate; 2113: inclined plate support member; 2114: tail baffle;
22: support rod structure; 221: front support rod array; 222: rear support rod array;
223: rod body; 224: connecting unit;
3: cylindrical flue; 31: inner sleeve; 32: ash hopper; 33: outer sleeve;
34: flue gas flow-through structure.

### DETAILED DESCRIPTION

For a clearer understanding of the technical features, the objectives and the effects of the present disclosure, specific embodiments of the present disclosure will now be described with reference to the drawings.

The specific embodiments of the present disclosure described here are intended only to explain the present disclosure, and cannot be understood as limitations to the present disclosure in any way. Under the teaching of the present disclosure, a skilled person can conceive any possible variation based on the present disclosure, which should be regarded as falling within the scope of the present disclosure. It should be noted that when an element is referred to as being 'disposed on' another element, it may be directly on another element or there may be an intervening element. When an element is considered to be 'connected to' another element, it may be directly connected to another element or there may be an intervening element. The term 'mounting' or 'connection' should be understood in a broad sense, for example, it may be a mechanical or electrical connection, or it may be a communication between interiors of two elements, and it may be a direct connection or an indirect connection through an intermediate medium. For persons of ordinary skill in the art, the specific meaning of the above term can be understood according to specific conditions. The terms 'vertical', 'horizontal', 'upper', 'lower', 'left' and 'right' and similar expressions used herein are only for the purpose of illustration, rather than indicating a unique embodiment.

Unless otherwise defined, all technical and scientific terms used herein have the same meanings as those commonly understood by persons skilled in the art of the present application. The terms used in the specification of this application are only for the purpose of describing the specific embodiments and are not intended to limit the present application. As used herein, the term 'and/or' includes any and all combinations of one or more associated listed items.

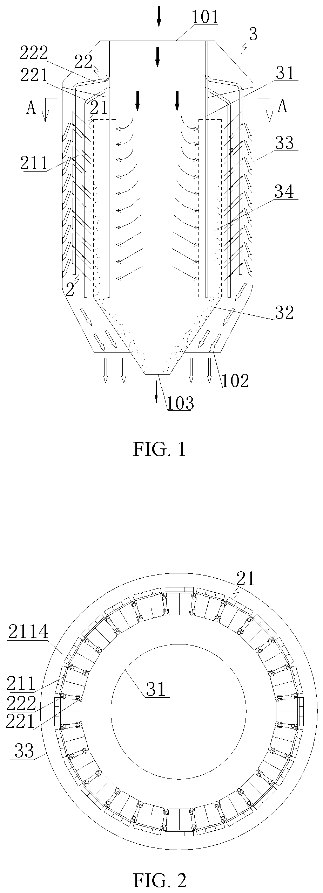

As illustrated in FIGS. 1 to 6, the present disclosure provides a shallow incline plate settlement apparatus 2. A flue gas channel is provided with a flue gas inlet 101, a flue gas outlet 102 and an ash outlet 103. The shallow incline plate settlement apparatus 2 is disposed between the flue gas inlet 101 and the flue gas outlet 102 of the flue gas channel. The shallow incline plate settlement apparatus 2 is used for allowing flue gas to flow through and for settling and trapping particles in the flue gas that has been decelerated. An area where the shallow incline plate settlement apparatus 2 is disposed in the flue gas channel serves as an inclined plate settling area.

The shallow incline plate settlement apparatus 2 includes a plurality of settling layers 21 disposed in parallel at intervals. Each settling layer 21 includes a plurality of shallow settling units 211 disposed inclinedly. Each shallow settling unit 211 includes an inclined plate group. Each inclined plate group includes a bottom inclined plate 2111 and a plurality of upper inclined plates 2112 which are disposed in parallel at intervals. Flue gas settling channels are formed between the adjacent upper inclined plates 2112, and between the bottom inclined plate 2111 and the upper inclined plates 2112 adjacent thereto. The Flow-through cross-section of the flue gas settling channel between two inclined plates is determined by the spacing b between the two inclined plates, and the spacing b is determined according to actual needs, generally with a value range 10 mm≤b≤300 mm.

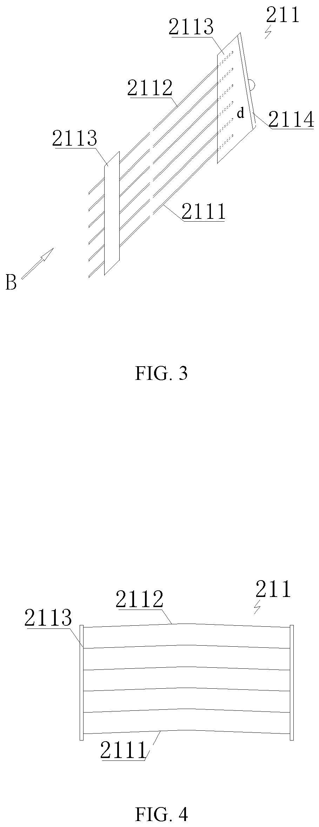

A side of the inclined plate group located at an entrance of the flue gas settling channel is inclined downward to make the trapped particles flow downward, that is, sides of the bottom inclined plate 2111 and each of the upper inclined plates 2112 close to the ash outlet 103 are inclined downward to make the trapped particles flow toward the ash outlet. As illustrated in FIGS. 2 and 4, the bottom inclined plate 2111 and each of the upper inclined plates 2112 are arched bent plates that arch upward, and a vault folded line at the top of the arched bent plate is arranged along a flue gas flow direction. Each of the inclined plates (i.e., the bottom inclined plate 2111 and the upper inclined plates 2112) of the shallow settling unit 211 is a biaxial inclined structure.

In the prior art, when flue gas with a high or low temperature periodically flows through an inclined plate settling area, inclined plates in the inclined plate settling area are easily deformed under thermal stress, which will adversely affect the particle settling process and the collection process of the settling particles falling down. In the present disclosure, the bottom inclined plate 2111 and each of the upper inclined plates 2112 of the present disclosure are biaxial inclined structures, which can reduce the influence of the deformation caused by high-temperature thermal stress on the settling and collection effects.

It can be appreciated that the biaxial inclined structure means that the inclined plate (i.e., each of the bottom inclined plate 2111 and the upper inclined plates 2112) is inclined with respect to an axial direction of the shallow incline plate settlement apparatus 2 (i.e., an axial direction of an inner sleeve 31 shown in FIG. 1) and a radial direction of the shallow incline plate settlement apparatus 2 (i.e., a radial direction of the inner sleeve 31 shown in FIG. 1), and the inclined plate itself is an inclined structure (i.e., an arched bent plate).

The arched bent plate means that two portions of the inclined plate located on opposite sides of a centerline of the inclined plate are inclined toward the same side of the inclined plate, and that the inclined plate is substantially V-shaped or arch-shaped (as shown in FIG. 4).

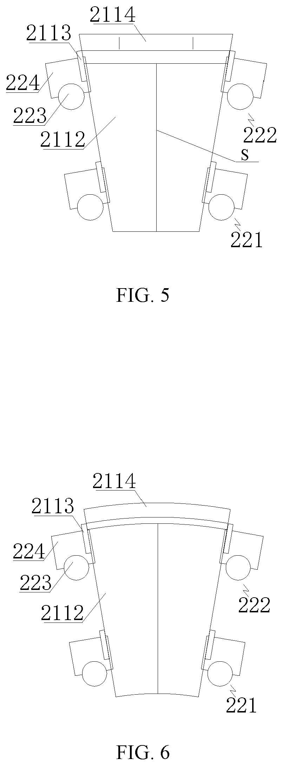

Exemplarily, as shown in FIG. 1, the shallow settling units 211 of the shallow incline plate settlement apparatus 2 are disposed in an annular space between an inner sleeve 31 and an outer sleeve 33. Each inclined plate has a first end and a second end which are disposed opposite to each other in a radial direction of the annular space (i.e., a radial direction of the inner sleeve 31), the second end is closer to the outer sleeve 33 than the first end, and each inclined plate is inclined upwardly from the first end to the second end. Each inclined plate has a first side edge and a second side edge which are disposed opposite to each other in the circumferential direction of the annular space (i.e., a circumferential direction of the inner sleeve 31) and are symmetric with respect to a center line S of the inclined plate (as shown in FIGs. 4 and 5), and each inclined plate is inclined downwardly from the center line S to the first side edge and is inclined downwardly from the center line S to the second side edge. The above configuration of the inclined plate is referred to as a biaxial inclined structure.

As illustrated in FIGS. 2 and 3, a tail baffle 2114 is disposed on a side of the inclined plate group located at an exit of the flue gas settling channel, i.e., the tail baffle 2114 is disposed on a side of the inclined plate group (the bottom inclined plate 2111 and each of the upper inclined plates 2112) away from the ash outlet 103.

Exemplarily, as shown in FIG. 3, each tail baffle 2114 is disposed at and spaced apart from the second ends of the plurality of inclined plates of each shallow settling unit 211 to isolate the flue gas flowing out of the flue gas settling channel from the inner wall of the outer sleeve 33, thereby preventing the high-temperature flue gas from directly scouring and wearing the inner wall of the outer sleeve 33. In addition, the tail baffle 2114 can change the flow direction of the flue gas, so that the flue gas can flow downwardly towards the flue gas outlet 102 of the outer sleeve 33.

In the prior art, after flowing through the inclined plate settling area, the high-temperature flue gas will directly scour a next contact unit (e.g., an inner wall of an outer sleeve of a cylindrical flue) and aggravate the wearing thereof. In the present disclosure, the tail baffle 2114 can direct the flow of the flue gas, and can reduce the direct scouring and wearing of the high-temperature flue gas on the next contact unit when the high-temperature flue gas flows out of the shallow settling unit 211.

According to the present disclosure, the shallow incline plate settlement apparatus is disposed in the inclined plate settling area, so that when the dust-containing flue gas enters into the shallow incline plate settlement apparatus at a low velocity, particles are settled on the inclined plate, thereby realizing separation of particles from the flue gas. The present disclosure adopts shallow settling technology, and the settling effect can be ensured by reasonably setting the number of layers of the inclined plates and the spacings between the inclined plates of the shallow settling unit.

Each of the inclined plates of the shallow settling unit adopts a biaxial inclined structure, thereby reducing the influence of the steel plate deformation caused by high-temperature thermal stress on the settling and collection effects.

The tail baffle disposed at the tail of the inclined plate group of the shallow settling unit can not only direct the flow of the flue gas, but also prevents the flue gas, especially the high-temperature flue gas, from directly scouring the next contact unit.

Further, as illustrated in FIG. 3, the tail baffle 2114 is a steel plate and inclinedly disposed at a second included angle β with respect to a vertical plane. The spacings d between the tail baffle 2114 and the plurality of upper inclined plates 2112 and between the tail baffle 2114 and the bottom inclined plate 2111 are increased sequentially from top to bottom.

A cross-sectional area between the tail baffle 2114 and the bottom inclined plate 2111 is not less than a cross-sectional area of the flue gas inlet of the shallow settling unit 211, so as to avoid the velocity of flue gas flowing out of the shallow incline plate settlement apparatus 2 from increasing. After flowing out of the inclined plate group, the flue gas reaches the tail baffle 2114 which changes the flow direction of the flue gas to prevent the flue gas from contacting and directly scouring the next contact unit.

Further, a non-windward surface (i.e., a surface facing away from the flue gas) of the tail baffle 2114 is provided with a mounting handle to facilitate hoisting of the single shallow settling unit 211.

Further, as illustrated in FIGS. 1 and 2, the shallow incline plate settlement apparatus further includes a support rod structure 22 disposed in the flue gas channel. The support rod structure 22 supports and is connected to the shallow settling units 211 of the settling layers.

Further, the bottom inclined plate and each of the upper inclined plates are inclinedly disposed at a first included angle α with respect to a horizontal plane. One side or two sides of the bottom inclined plate 2111 and one side or two sides of each of the upper inclined plates 2112 are connected to an inclined plate support member 2113 respectively.

In a specific embodiment of the present disclosure, the first included angle α is greater than or equal to 30° and less than 90°. The second included angle β has a range 0° ≦ β < (90°-α).

Further, the bottom inclined plate 2111 and each of the upper inclined plates 2112 are made of steel plates. The inclined plate support member 2113 is made of a steel plate, angle steel, channel steel, square steel or round steel, and is connected to the support rod structure 22 by, for example, welding or a clamping groove.

The bottom inclined plate 2111 and each of the upper inclined plates 2112 have the same or similar shapes. The front and rear of the steel plate are defined in line with the flow direction of the flue gas. A width w1 of a front side of the steel plate is generally 100 to 500 mm, a length L of the steel plate is 100 to 1500 mm, and a width w2 of a rear side of the steel plate is generally 100 to 700 mm depending on the diameter of the inner cylinder and the length of the steel plate. In a cylindrical flue, the bottom inclined plate 2111 and each of the upper inclined plates 2112 are isosceles trapezoidal steel plates. In a rectangular flue, the bottom inclined plate 2111 and each of the upper inclined plates 2112 are rectangular or isosceles trapezoidal steel plates depending on the flow-through areas of the gas flow before and after flowing through the shallow settlement apparatus.

The isosceles trapezoidal steel plate or rectangular steel plate is bent toward both sides along a centerline thereof to form an arched bent plate with a high centerline and low waist edges and with two inclined planes of small inclination angles. The left and right waist edges of isosceles trapezoidal steel plate (i.e., two sides between the front and rear sides of the steel plate), and the left and right sides of rectangular steel plate are blunted, reserved with support clamping grooves, smoothly cut, etc., according to the size and position of the inclined plate support member 2113.

A front left support member and a front right support member are disposed at front positions on the left and right waist edges of the bottom inclined plate 2111 and the plurality of upper inclined plates 2112, respectively, and are connected to the bottom inclined plate 2111 and each of the upper inclined plates 2112 in turn. The front left support member and the front right support member (i.e., the inclined plate support members 2113) may be steel plates, support rods, angle steel, channel steel, etc., and are connected to the bottom inclined plate 2111 and each of the upper inclined plates 2112 by welding or by clamping grooves disposed on the bottom inclined plate 2111 and each of the upper inclined plates 2112. A rear left support member and a rear right support member are disposed at rear positions on the left and right waist edges of the bottom inclined plate 2111 and the plurality of upper inclined plates 2112.

Exemplarily, each shallow settling unit 211 includes four inclined plate support members 2113. The first inclined plate support member 2113 is provided on the left side of the front portion of the inclined plate group and is connected to the left side edges of the inclined plates (i.e., the bottom ramp 2111 and the plurality of upper ramps 2112) of the inclined plate group. The second inclined plate support member 2113 is provided on the right side of the front portion of the inclined plate group and is connected to the right side edges of the inclined plates. The third inclined plate support member 2113 is provided on the left side of the rear portion of the inclined plate group and is connected to the left side edges of the inclined plates. The fourth inclined plate support member 2113 is provided on the right side of the rear portion of the inclined plate group and is connected to the right side edges of the inclined plates. The third and fourth inclined plate support member 2113 protrude from the rear side edges of all the inclined plates, and the rear side edges of the third and fourth inclined plate support member 2113 are connected to the tail baffle 2114 disposed behind the inclined plate group, so that spacings d allowing flue gas to flow through are formed between the tail baffle 2114 and inclined plate group. The spacings d are increased sequentially from top to bottom, i.e., the spacing between the tail baffle 2114 and the bottom inclined plate 2111 among all the spacings is the largest, which contributes to reducing the flow velocity of the flue gas and also facilitates the settling of particles in the flue gas.

Further, as illustrated in FIGS. 5 and 6, the support rod structure 22 includes a rod body 223 on which connecting units 224 are disposed at intervals, and each connecting unit 224 is fixedly connected to the inclined plate support member 2113.

In this embodiment, the rod body may be made of a steel pipe, a water-cooled pipe fitting, round steel, etc. The connecting unit is a connecting rib plate, a clamping seat or a bracket. The rod body is provided with the connecting units at different positions thereof to support the shallow settling units 211.

The present disclosure further provides a particle trapping method based on shallow inclined plate settling, including: disposing the shallow incline plate settlement apparatus 2 between the flue gas inlet 101 and the flue gas outlet 102 in the flue gas channel; the flue gas entering the flue gas channel through the flue gas inlet flows to the shallow incline plate settlement apparatus 2 after being decelerated by a flue gas deceleration structure, and the decelerated flue gas flows through the flue gas settling channels between the adjacent upper inclined plates 2112 and between the bottom inclined plate 2111 and the upper inclined plate 2112 adjacent thereto, and is diverted to the flue gas outlet by the tail baffle 2114; particles in the flue gas are settled on the sides of the bottom inclined plate 2111 and the upper inclined plates 2112 close to the ash outlet, and the particles settled on the bottom inclined plate 2111 and the upper inclined plates 2112 flow downward to the ash outlet.

### Embodiment 1

As illustrated in FIG. 1, the flue gas channel is a cylindrical flue 3, which includes an inner sleeve 31. An ash hopper 32 is disposed below the inner sleeve 31. A diameter of the top end of the ash hopper 32 is larger than an outer diameter of the inner sleeve 31. An outer sleeve 33 is sleeved outside the inner sleeve 31 and the ash hopper 32, and is radially spaced apart from the inner sleeve 31 and the ash hopper 32. A top end of the inner sleeve 31 is provided with a flue gas inlet 101. The side wall of the inner sleeve 31 is provided with a flue gas flow-through structure 34 that is in communication with the space inside the inner sleeve 31 and the space between the inner sleeve 31 and the outer sleeve 33. The flue gas flow-through structure 34 is constructed to decelerate and direct the flue gas inside the inner sleeve 31 to the outer sleeve to serve as a flue gas deceleration structure. A bottom end of the outer sleeve 33 is provided with a flue gas outlet 102. A bottom end of the ash hopper 32 is protrudes outside of the bottom end of the outer sleeve 33, and the bottom end of the ash hopper 32 is provided with an ash outlet 103.

A shallow incline plate settlement apparatus 2 is disposed between the flue gas flow-through structure 34 and the inner wall of the outer sleeve 33. Sides of the bottom inclined plate 2111 and each of the upper inclined plates 2112 close to the inner sleeve 31 are located above the ash hopper 32, and inclinedly disposed downward to make the trapped particles flow to the ash outlet 103. A tail baffle 2114 is disposed on sides of the bottom inclined plate 2111 and each of the upper inclined plates 2112 away from the inner sleeve 31. The bottom inclined plate 2111 and each of the upper inclined plates 2112 are arched bent plates with a vault folded line extended from the inner sleeve 31 to the outer sleeve 33.

Further, as illustrated in FIGS. 1 and 2, a support rod structure 22 penetrating axially is disposed between the flue gas flow-through structure 34 and the inner wall of the outer sleeve 33. The support rod structure 22 includes a front support rod array 221 and a rear support rod array 222 disposed along the flow direction of the flue gas to support and be connected to the shallow settling units 211 of the settling layers.

In the inclined plate settling area, the inner cooling pipes (i.e., the front support rod array 221) penetrating from top to bottom and arranged annularly and the outer cooling pipes (i.e., the rear support rod array 222) penetrating from top to bottom and arranged annularly constitute the support rod structure 22. Several groups of shallow settling units are disposed annularly from top to bottom to constitute the shallow incline plate settlement apparatus 2, thereby forming an annular inclined plate settling area.

The inclined plate group includes the upper inclined plates 2112 of a layers (a≥1) and the bottom inclined plate 2111 of one layer. The inclined plate support members 2113 are a front left support member, a front right support member, a rear left support member and a rear right support member. The tail baffle 2114 may be connected to the rear right support member.

Taking the particle trapping device behind a converter flue gas vaporization and cooling flue as an example, an inner sleeve of the particle trapping device is DN2300mm. Two circles of cooling pipes (i.e., the front support rod array 221 and the rear support rod array 222) are evenly distributed between the inner sleeve 31 and the outer sleeve 33 and penetrate the inclined plate settling area from top to bottom. Each circle of the cooling pipes (i.e., the front support rod array 221 and the rear support rod array 222) consists of 24 water-cooled heat-receiving tubes (i.e., rod bodies).

Each water-cooled heat-receiving tube is provided with nine smooth-surface brackets and clamping-groove brackets (i.e., connecting units) from top to bottom to support the shallow settling units 211. Between the inner and outer circles of cooling pipes (i.e., the front support rod array 221 and the rear support rod array 222), nine settling layers are disposed from top to bottom, each settling layer including 24 shallow settling units uniformly distributed annularly, to constitute the shallow incline plate settlement apparatus 2, thereby forming the inclined plate settling area.

The shallow settling units 211 have the same specification. The inclined plate group includes five layers of upper inclined plates 2112 and one layer of bottom inclined plate 2111. The inclined plate support members 2113 includes a front left support member, a front right support member, a rear left support member and a rear right support member. The rear left support member, the rear right support member, the rear baffle 2114, a positioning hook pin and a mounting handle may constitute a rear support frame.

Both the upper inclined plate 2112 and the bottom inclined plate 2111 are isosceles trapezoidal steel plates with narrow front sides and wide rear sides. FIG. 5 is a schematic diagram of an upper inclined plate in the shape of isosceles trapezoidal with straight front and rear sides, and FIG. 6 is a schematic diagram of an upper inclined plate in the shape of isosceles trapezoid with circular-arced front and rear sides. The width of the front side of the isosceles trapezoid steel plate is 300 mm, the length of it is 600 mm, and the width of the rear side of it is 500 mm. The isosceles trapezoidal steel plate is bent toward the two sides along the centerline thereof to form an arched bent plate with a high centerline and low waist edges and with two inclined planes of small inclination angles. A width of a front side that has been bent is 280 mm, and a width of the rear side that has been bent is 480 mm. The left and right waist edges (two sides between the front and rear sides of the steel plate) of the isosceles trapezoidal steel plate are blunted, smoothly cut, etc., according to the size and position of the inclined plate support member 2113. A support clamping groove may be provided at the waist edge of the bottom inclined plate 2111.

The first included angles α between the five layers of upper inclined plates 2112 and the horizontal plane, and between the bottom inclined plate 2111 and the horizontal plane are 45°, and the inclined plate has two inclined surfaces (i.e., two inclined surface of the arched bent plate on two sides of the vault folded line), thereby forming a biaxial inclined plate group.

The spacing b between the adjacent upper inclined plates 2112 and between the bottom inclined plate 2111 and the upper inclined plate 2112 adjacent thereto is 70 mm. The front left support member and the front right support member disposed at the front positions on the waist edges of the bottom inclined plate 2111 and each of the upper inclined plates 2112 are heat-resistant steel plates. A rear support frame is disposed at the rear of the inclined plate group. The rear support frame includes a left rear support member and a right rear support member, both of which are steel plates. The upper and lower sides of the left rear support member and the right rear support member are parallel to the upper inclined plate 2112 and the bottom inclined plate 2111. Clamping grooves are disposed on one side of the left rear support member and on one side of the right rear support member in the vertical direction to be connected to the inclined plates (i.e., the bottom inclined plate 2111 and each of the upper inclined plates 2112), and positioning hook pins are disposed at lower ends of the two sides. The other side of the left rear support member and the other side of the right rear support member in the vertical direction are connected to the tail baffle 2114.

The tail baffle 2114 is also a steel plate, and the second included angle β between the tail baffle 2114 and the vertical plane is 10°, so that the spacings between the tail baffle 2114 and the rear sides of the inclined plates are increased sequentially from top to bottom. The non-windward surface of the tail baffle 2114 is provided with two mounting handles to facilitate hoisting of a single shallow settling unit.

In the above embodiments, all the steel plates are heat-resistant steel plates. The single shallow settling unit 211 is supported in the particle trapping device by the connection between the bottom inclined plate and the smooth-surface bracket and the clamping-groove bracket disposed on the cooling pipe.

Based on the above description, the shallow incline plate settlement apparatus and the particle trapping method of the present disclosure have the following advantageous effects:
According to the present disclosure, the shallow incline plate settlement apparatus is disposed in the inclined plate settling area, so that when the dust-containing flue gas enters into the shallow incline plate settlement apparatus at a low velocity, particles are settled on the inclined plate, thereby realizing separation of particles from the flue gas. The present disclosure adopts shallow settling technology, and the settling effect can be ensured by reasonably setting the number of layers of the inclined plates and the spacings between the inclined plates of the shallow settling unit.

Each of the inclined plates of the shallow settling unit adopts a biaxial inclined structure, thereby reducing the influence of the steel plate deformation caused by high-temperature thermal stress on the settling and collection effects.

The tail baffle disposed at the tail of the inclined plate group of the shallow settling unit can not only direct the flow of the flue gas, but also prevents the flue gas, especially the high-temperature flue gas, from directly scouring the next contact unit.

Those described above are just illustrative embodiments of the present disclosure, rather than limitations thereto. Any equivalent change and modification made by persons skilled in the art without departing from the concept and principle of the present disclosure should fall within the scope of the present disclosure.

## Claims

1. A shallow incline plate settlement apparatus (2) disposed between a flue gas inlet (101) and a flue gas outlet (102) of a flue gas channel and used for allowing flue gas to flow through and for settling and trapping particles in the flue gas;
wherein the shallow incline plate settlement apparatus (2) comprises a plurality of settling layers (21) disposed in parallel at intervals, each settling layer (21) comprises a plurality of shallow settling units (211) disposed in a circumferential direction, and each shallow settling unit (211) comprises an inclined plate group which comprises a bottom inclined plate (2111) and a plurality of upper inclined plates (2112) disposed in parallel at intervals;
flue gas settling channels are formed between the adjacent upper inclined plates (2112), and between the bottom inclined plate (2111) and the upper inclined plate (2112) adjacent thereto;
the bottom inclined plate (2111) and each upper inclined plate (2112) are inclinedly disposed at a first included angle with respect to a horizontal plane, so that a side of the inclined plate group located at an entrance of the flue gas settling channel is inclined downward to make the trapped particles flow downward;
the bottom inclined plate (2111) and each upper inclined plate (2112) are arched bent plates that arch upward, and a vault folded line at the top of the arched bent plate is arranged along a flue gas flow direction;
**characterized in that**
each of the bottom inclined plate (2111) and the upper inclined plates (2112) has a first side edge (2115) and a second side edge (2116) which are disposed opposite to each other in the circumferential direction and are symmetric with respect to a center line (S) of the inclined plate, and each inclined plate is inclined downwardly from the center line (S) to the first side edge (2115) and is inclined downwardly from the center line (S) to the second side edge (2116), so that the bottom inclined plate (2111) and each upper inclined plate (2112) are biaxial inclined structures;
a tail baffle (2114) is disposed on a side of the inclined plate group located at an exit of the flue gas settling channel; and
the tail baffle (2114) is inclinedly disposed at a second included angle with respect to a vertical plane, and spacings (d) between the tail baffle (2114) and the plurality of upper inclined plates (2112) and between the tail baffle (2114) and the bottom inclined plate (2111) are increased sequentially from top to bottom.

2. The shallow incline plate settlement apparatus according to claim 1, further comprising a support rod structure (22) which supports and is connected to the shallow settling units (211) of the settling layers (21).

3. The shallow incline plate settlement apparatus according to claim 2, wherein the shallow settling unit (211) further comprises an inclined plate support member (2113) which supports and is connected to the inclined plate group, and the inclined plate support member (2113) is connected to the support rod structure (22).

4. The shallow incline plate settlement apparatus according to claim 3, wherein
one or two sides of the bottom inclined plate (2111) and one or two sides of each upper inclined plate (2112) are connected to the inclined plate support member (2113), respectively.

5. The shallow incline plate settlement apparatus according to claim 4, wherein the first included angle is greater than or equal to 30° and less than 90°.

6. The shallow incline plate settlement apparatus according to claim 3, wherein the supporting rod structure (22) comprises a rod body (223) on which connecting units (224) are disposed at intervals, and each connecting unit (224) is fixedly connected to the inclined plate support member (2113).

7. The shallow incline plate settlement apparatus according to claim 6, wherein the connecting unit (224) is a connecting rib plate, a clamping seat or a bracket.

8. The shallow incline plate settlement apparatus according to claim 2, wherein the support rod structure (22) comprises a front support rod array (221) and a rear support rod array (222) disposed along a flow direction of the flue gas to support and be connected to the shallow settling units (211) of the settling layers (21).

9. A particle trapping apparatus, comprising an inner sleeve (31), an outer sleeve (33), a flue gas deceleration structure, and the shallow incline plate settlement apparatus (2) according to claim 1;
wherein the outer sleeve (33) is disposed outside the inner sleeve (31), and an annular space is formed between the inner sleeve (31) and the outer sleeve (33);
the shallow incline plate settlement apparatus (2) is disposed in the annular space, the plurality of settling layers (21) of the shallow incline plate settlement apparatus (2) is disposed in parallel and at intervals along an axial direction of the annular space, and the flue gas settling channel of the shallow incline plate settlement apparatus (2) is in communication with an inner cavity of the inner sleeve (31) through an opening on a side wall of the inner sleeve (31);
each inclined plate has a first end and a second end which are disposed opposite to each other in a radial direction of the annular space, the second end is closer to the outer sleeve (33) than the first end, and each inclined plate is inclined upwardly from the first end to the second end; each tail baffle (2114) of the shallow incline plate settlement apparatus (2) is disposed at and spaced apart from the second ends of the plurality of inclined plates of each shallow settling unit (211) to isolate the flue gas flowing out of the flue gas settling channel from the inner wall of the outer sleeve (33);
the first side edge (2115) and the second side edge (2116) of each inclined plate are disposed opposite to each other in the circumferential direction of the annular space; and
spacings between the tail baffle (2114) and the plurality of inclined plates are increased sequentially from top to bottom.

10. A particle trapping method, comprising:
disposing the shallow incline plate settlement apparatus (2) according to any one of claims 1 to 8 between a flue gas inlet (101) and a flue gas outlet (102) of a flue gas channel, and disposing a flue gas deceleration structure between the flue gas inlet (101) and the shallow incline plate settlement apparatus (2), wherein flue gas entering the flue gas channel through the flue gas inlet (101) flows to the shallow incline plate settlement apparatus (2) after being decelerated by the flue gas deceleration structure, and the decelerated flue gas flows through the flue gas settling channels between the adjacent upper inclined plates (2112) and between the bottom inclined plate (2111) and the upper inclined plate (2112) adjacent thereto, and is diverted to the flue gas outlet (102) by the tail baffle (2114); particles in the flue gas are settled on the sides of the bottom inclined plate (2111) and the upper inclined plates (2112) close to an ash outlet (103), and the particles settled on the bottom inclined plate (2111) and the upper inclined plates (2112) flow downward to the ash outlet (103).

## Patentansprüche

1. Plattenabsetzungsvorrichtung (2) mit flacher Neigung, die zwischen einem Rauchgaseinlass (101) und einem Rauchgasauslass (102) eines Rauchgaskanals angeordnet ist und verwendet wird, um Rauchgas durchströmen zu lassen und um Partikel in dem Rauchgas abzusetzen und einzufangen;
wobei die Plattenabsetzungsvorrichtung (2) mit flacher Neigung eine Vielzahl von Absetzschichten (21) umfasst, die in Intervallen parallel angeordnet sind, jede Absetzschicht (21) eine Vielzahl von flachen Absetzeinheiten (211) umfasst, die in einer Umfangsrichtung angeordnet sind, und jede flache Absetzeinheit (211) eine geneigte Plattengruppe umfasst, die eine untere geneigte Platte (2111) und eine Vielzahl von oberen geneigten Platten (2112) umfasst, die in Intervallen parallel angeordnet sind;
Rauchgasabsetzkanäle zwischen den benachbarten oberen geneigten Platten (2112) und zwischen der unteren geneigten Platte (2111) und der oberen geneigten Platte (2112) benachbart dazu gebildet sind;
die untere geneigte Platte (2111) und jede obere geneigte Platte (2112) in einem ersten eingeschlossenen Winkel in Bezug auf eine horizontale Ebene geneigt angeordnet sind, sodass eine Seite der geneigten Plattengruppe, die sich an einem Eingang des Rauchgasabsetzkanals befindet, nach unten geneigt ist, um die eingefangenen Partikel nach unten strömen zu lassen;
die untere geneigte Platte (2111) und jede obere geneigte Platte (2112) gewölbte gebogene Platten sind, die sich nach oben wölben, und eine gefaltete Grate an der Oberseite der gewölbten gebogenen Platte entlang einer Rauchgasströmungsrichtung arrangiert ist;
**dadurch gekennzeichnet, dass**
jede von der unteren geneigten Platte (2111) und den oberen geneigten Platten (2112) eine erste Seitenkante (2115) und eine zweite Seitenkante (2116) aufweist, die in der Umfangsrichtung einander gegenüberliegend angeordnet sind und in Bezug auf eine Mittellinie (S) der geneigten Platte symmetrisch sind, und jede geneigte Platte von der Mittellinie (S) zu der ersten Seitenkante (2115) nach unten geneigt ist und von der Mittellinie (S) zu der zweiten Seitenkante (2116) nach unten geneigt ist, sodass die untere geneigte Platte (2111) und jede obere geneigte Platte (2112) biaxiale geneigte Strukturen sind;
ein Heckleitblech (2114) an einer Seite der geneigten Plattengruppe angeordnet ist, die sich an einem Ausgang des Rauchgasabsetzkanals befindet; und
das Heckleitblech (2114) in einem zweiten eingeschlossenen Winkel in Bezug auf eine vertikale Ebene geneigt angeordnet ist und Abstände (d) zwischen dem Heckleitblech (2114) und der Vielzahl von oberen geneigten Platten (2112) und zwischen dem Heckleitblech (2114) und der unteren geneigten Platte (2111) sequentiell von oben nach unten vergrößert sind.

2. Plattenabsetzungsvorrichtung mit flacher Neigung nach Anspruch 1, ferner umfassend eine Stützstangenstruktur (22), welche die flachen Absetzeinheiten (211) der Absetzschichten (21) stützt und mit diesen verbunden ist.

3. Plattenabsetzungsvorrichtung mit flacher Neigung nach Anspruch 2, wobei die flache Absetzeinheit (211) ferner ein geneigtes Plattenstützelement (2113) umfasst, das die geneigte Plattengruppe stützt und mit dieser verbunden ist, und das geneigte Plattenstützelement (2113) mit der Stützstangenstruktur (22) verbunden ist.

4. Plattenabsetzungsvorrichtung mit flacher Neigung nach Anspruch 3, wobei eine oder zwei Seiten der unteren geneigten Platte (2111) und eine oder zwei Seiten jeder oberen geneigten Platte (2112) jeweils mit dem geneigten Plattenstützelement (2113) verbunden sind.

5. Plattenabsetzungsvorrichtung mit flacher Neigung nach Anspruch 4, wobei der erste eingeschlossene Winkel größer als oder gleich 30° und kleiner als 90° ist.

6. Plattenabsetzungsvorrichtung mit flacher Neigung nach Anspruch 3, wobei die stützende Stangenstruktur (22) einen Stangenkörper (223) umfasst, auf dem Verbindungseinheiten (224) in Intervallen angeordnet sind, und jede Verbindungseinheit (224) fest mit dem geneigten Plattenstützelement (2113) verbunden ist.

7. Plattenabsetzungsvorrichtung mit flacher Neigung nach Anspruch 6, wobei die Verbindungseinheit (224) eine Verbindungsrippenplatte, ein Klemmsitz oder eine Klammer ist.

8. Plattenabsetzungsvorrichtung mit flacher Neigung nach Anspruch 2, wobei die Stützstangenstruktur (22) eine vordere Stützstangenanordnung (221) und eine hintere Stützstangenanordnung (222) umfasst, die entlang einer Strömungsrichtung des Rauchgases angeordnet sind, um die flachen Absetzeinheiten (211) der Absetzschichten (21) zu stützen und damit verbunden zu sein.

9. Partikeleinfangvorrichtung, umfassend eine Innenhülse (31), eine Außenhülse (33), eine Rauchgasverzögerungsstruktur und die Plattenabsetzungsvorrichtung (2) mit flacher Neigung nach Anspruch 1;
wobei die Außenhülse (33) außerhalb der Innenhülse (31) angeordnet ist und ein Ringraum zwischen der Innenhülse (31) und der Außenhülse (33) gebildet ist;
die Plattenabsetzungsvorrichtung (2) mit flacher Neigung in dem Ringraum angeordnet ist, die Vielzahl von Absetzschichten (21) der Plattenabsetzungsvorrichtung (2) mit flacher Neigung parallel und in Intervallen entlang einer axialen Richtung des Ringraums angeordnet ist und der Rauchgasabsetzkanal der Plattenabsetzungsvorrichtung (2) mit flacher Neigung durch eine Öffnung an einer Seitenwand der Innenhülse (31) mit einem Innenhohlraum der Innenhülse (31) in Verbindung steht;
jede geneigte Platte ein erstes Ende und ein zweites Ende aufweist, die in einer radialen Richtung des Ringraums einander gegenüberliegend angeordnet sind, das zweite Ende näher an der Außenhülse (33) ist als das erste Ende und jede geneigte Platte von dem ersten Ende zu dem zweiten Ende nach oben geneigt ist; jedes Heckleitblech (2114) der Plattenabsetzungsvorrichtung (2) mit flacher Neigung an den zweiten Enden der Vielzahl von geneigten Platten jeder flachen Absetzeinheit (211) angeordnet und von diesen beabstandet ist, um das Rauchgas, das aus dem Rauchgasabsetzkanal strömt, von der Innenwand der Außenhülse (33) zu isolieren;
die erste Seitenkante (2115) und die zweite Seitenkante (2116) jeder geneigten Platte in der Umfangsrichtung des Ringraums einander gegenüberliegend angeordnet sind; und
Abstände zwischen dem Heckleitblech (2114) und der Vielzahl von geneigten Platten sequentiell von oben nach unten vergrößert sind.

10. Partikeleinfangverfahren, umfassend:
Anordnen der Plattenabsetzungsvorrichtung (2) mit flacher Neigung nach einem der Ansprüche 1 bis 8 zwischen einem Rauchgaseinlass (101) und einem Rauchgasauslass (102) eines Rauchgaskanals und Anordnen einer Rauchgasverzögerungsstruktur zwischen dem Rauchgaseinlass (101) und der Plattenabsetzungsvorrichtung (2) mit flacher Neigung, wobei Rauchgas, das durch den Rauchgaseinlass (101) in den Rauchgaskanal eintritt, zu der Plattenabsetzungsvorrichtung (2) mit flacher Neigung strömt, nachdem es durch die Rauchgasverzögerungsstruktur verzögert wurde, und das verzögerte Rauchgas durch die Rauchgasabsetzkanäle zwischen den benachbarten oberen geneigten Platten (2112) und zwischen der unteren geneigten Platte (2111) und der oberen geneigten Platte (2112) benachbart dazu strömt und durch die Heckleitblech (2114) zu dem Rauchgasauslass (102) umgeleitet wird; Partikel in dem Rauchgas an den Seiten der unteren geneigten Platte (2111) und der oberen geneigten Platten (2112) nahe einem Ascheauslass (103) abgesetzt werden und die Partikel auf der unteren geneigten Platte (2111) und den oberen geneigten Platten (2112) nach unten zu dem Ascheauslass (103) strömen.

## Revendications

1. Appareil de sédimentation à faible profondeur (2) à plaques inclinées disposé entre une entrée (101) de gaz de combustion et une sortie (102) de gaz de combustion d'un canal de gaz de combustion et utilisé pour permettre aux gaz de combustion de s'écouler à travers et pour sédimenter et piéger des particules présentes dans les gaz de combustion ;
ledit appareil de sédimentation à faible profondeur (2) à plaques inclinées comprenant une pluralité de couches de sédimentation (21) disposées en parallèle à intervalles, chaque couche de sédimentation (21) comprenant une pluralité d'unités de sédimentation à faible profondeur (211) disposées dans une direction circonférentielle, et chaque unité de sédimentation à faible profondeur (211) comprenant un groupe de plaques inclinées qui comprend une plaque inclinée inférieure (2111) et une pluralité de plaques inclinées supérieures (2112) disposées en parallèle à intervalles ;
des canaux de sédimentation de gaz de combustion étant formés entre les plaques inclinées supérieures (2112) adjacentes, et entre la plaque inclinée inférieure (2111) et la plaque inclinée supérieure (2112) adjacente à celle-ci ;
ladite plaque inclinée inférieure (2111) et chaque plaque inclinée supérieure (2112) étant disposées de manière inclinée selon un premier angle inclus par rapport à un plan horizontal, afin qu'un côté du groupe de plaques inclinées situé au niveau d'une entrée du canal de sédimentation des gaz de combustion soit incliné vers le bas pour faire couler les particules piégées vers le bas ;
ladite plaque inclinée inférieure (2111) et chaque plaque inclinée supérieure (2112) étant des plaques courbées en forme d'arc arquées vers le haut, et une ligne pliée de voûte au sommet de la plaque courbée en forme d'arc étant agencée le long d'une direction d'écoulement des gaz de combustion ;
**caractérisé en ce que**
chacune de la plaque inclinée inférieure (2111) et des plaques inclinées supérieures (2112) comportent un premier bord latéral (2115) et un second bord latéral (2116) qui sont disposés à l'opposé l'un de l'autre dans la direction circonférentielle et sont symétriques par rapport à une ligne centrale (S) de la plaque inclinée, et chaque plaque inclinée étant inclinée vers le bas à partir de la ligne centrale (S) vers le premier bord latéral (2115) et est inclinée vers le bas à partir de la ligne centrale (S) vers le second bord latéral (2116), afin que la plaque inclinée inférieure (2111) et chaque plaque inclinée supérieure (2112) soient des structures inclinées biaxiales ;
un déflecteur de queue (2114) est disposé sur un côté du groupe de plaques inclinées situé au niveau d'une sortie du canal de sédimentation des gaz de combustion ; et
le déflecteur de queue (2114) est disposé de manière inclinée selon un second angle inclus par rapport à un plan vertical, et les espacements (d) entre le déflecteur de queue (2114) et la pluralité de plaques inclinées supérieures (2112) et entre le déflecteur de queue (2114) et la plaque inclinée inférieure (2111) sont augmentés séquentiellement du haut vers le bas.

2. Appareil de sédimentation à faible profondeur à plaques inclinées selon la revendication 1, comprenant en outre
une structure de tige de support (22) qui supporte et est raccordée aux unités de sédimentation à faible profondeur (211) des couches de sédimentation (21).

3. Appareil de sédimentation à faible profondeur à plaques inclinées selon la revendication 2, ladite unité de sédimentation à faible profondeur (211) comprenant en outre un élément de support (2113) de plaque inclinée qui supporte et est raccordé au groupe de plaques inclinées, et ledit élément de support (2113) de plaque inclinée étant raccordé à la structure de tige de support (22).

4. Appareil de sédimentation à faible profondeur à plaques inclinées selon la revendication 3, un ou deux côtés de la plaque inclinée inférieure (2111) et un ou deux côtés de chaque plaque inclinée supérieure (2112) étant raccordés respectivement à l'élément de support (2113) de plaque inclinée.

5. Appareil de sédimentation à faible profondeur à plaques inclinées selon la revendication 4, ledit premier angle inclus étant supérieur ou égal à 30° et inférieur à 90°.

6. Appareil de sédimentation à faible profondeur à plaques inclinées selon la revendication 3, ladite structure de tige de support (22) comprenant un corps de tige (223) sur lequel des unités de raccordement (224) sont disposées à intervalles, et chaque unité de raccordement (224) étant raccordée de manière fixe à l'élément de support (2113) de plaque inclinée.

7. Appareil de sédimentation à faible profondeur à plaques inclinées selon la revendication 6, ladite unité de raccordement (224) étant une plaque de nervure de raccordement, un siège de serrage ou un support.

8. Appareil de sédimentation à faible profondeur à plaques inclinées selon la revendication 2, ladite structure de tige de support (22) comprenant un réseau de tiges de support avant (221) et un réseau de tiges de support arrière (222) disposés le long d'une direction d'écoulement des gaz de combustion pour supporter et être raccordés aux unités de sédimentation à faible profondeur (211) des couches de sédimentation (21).

9. Appareil de piégeage de particules, comprenant un manchon interne (31), un manchon externe (33), une structure de décélération des gaz de combustion et l'appareil de sédimentation à faible profondeur (2) à plaques inclinées selon la revendication 1 ;
ledit manchon externe (33) étant disposé à l'extérieur du manchon interne (31), et un espace annulaire étant formé entre le manchon interne (31) et le manchon externe (33) ;
ledit appareil de sédimentation à faible profondeur (2) à plaques inclinées étant disposé dans l'espace annulaire,
ladite pluralité de couches de sédimentation (21) de l'appareil de sédimentation à faible profondeur (2) à plaques inclinées étant disposées en parallèle et à intervalles le long d'une direction axiale de l'espace annulaire, et ledit canal de sédimentation des gaz de combustion de l'appareil de sédimentation à faible profondeur (2) à plaques inclinées étant en communication avec une cavité interne du manchon interne (31) à travers une ouverture sur une paroi latérale du manchon interne (31) ;
chaque plaque inclinée comportant une première extrémité et une seconde extrémité qui sont disposées à l'opposé l'une de l'autre dans une direction radiale de l'espace annulaire, la seconde extrémité étant plus proche du manchon externe (33) que la première extrémité, et chaque plaque inclinée étant inclinée vers le haut à partir de la première extrémité vers la seconde extrémité ; chaque déflecteur de queue (2114) de l'appareil de sédimentation à faible profondeur (2) à plaques inclinées étant disposé au niveau des secondes extrémités de la pluralité de plaques inclinées de chaque unité de sédimentation à faible profondeur (211) et espacé de celles-ci pour isoler les gaz de combustion s'écoulant hors du canal de sédimentation des gaz de combustion à partir de la paroi interne du manchon externe (33) ;
ledit premier bord latéral (2115) et ledit second bord latéral (2116) de chaque plaque inclinée étant disposés à l'opposé l'un de l'autre dans la direction circonférentielle de l'espace annulaire ; et
les espacements entre le déflecteur de queue (2114) et la pluralité de plaques inclinées sont augmentés séquentiellement du haut vers le bas.

10. Procédé de piégeage de particules, comprenant :
la disposition de l'appareil de sédimentation à faible profondeur (2) à plaques inclinées selon l'une quelconque des revendications 1 à 8 entre une entrée (101) de gaz de combustion et une sortie (102) de gaz de combustion d'un canal de gaz de combustion, et la disposition d'une structure de décélération de gaz de combustion entre l'entrée (101) de gaz de combustion et l'appareil de sédimentation à faible profondeur (2) à plaques inclinées, lesdits gaz de combustion entrant dans le canal de gaz de combustion par l'entrée (101) de gaz de combustion s'écoulant vers l'appareil de sédimentation à faible profondeur (2) à plaques inclinées après avoir été décéléré par la structure de décélération de gaz de combustion, et lesdits gaz de combustion décéléré s'écoulant à travers les canaux de sédimentation de gaz de combustion entre les plaques inclinées supérieures (2112) adjacentes et entre la plaque inclinée inférieure (2111) et la plaque inclinée supérieure (2112) adjacente à celle-ci, et étant déviés vers la sortie (102) de gaz de combustion par le déflecteur de queue (2114) ; lesdites particules dans les gaz de combustion étant sédimentées sur les côtés de la plaque inclinée inférieure (2111) et des plaques inclinées supérieures (2112) à proximité d'une sortie de cendres (103), et lesdites particules sédimentées sur le fond incliné (2111) et les plaques inclinées supérieures (2112) s'écoulant vers le bas vers la sortie de cendres (103).
